# EUROPÄISCHE PATENTSCHRIFT

(11) **EP 3 769 554 B1**
(45) Veröffentlichungstag und Bekanntmachung des Hinweises auf die Patenterteilung: **24.05.2023**
(21) Anmeldenummer: 19710319.5
(22) Anmeldetag: 27.02.2019
(51) Int. Cl.: H04W 12/00, H04W 12/06, H04W 4/02, H04W 4/80

(54) **VERFAHREN UND SYSTEM ZUR AUTORISIERUNG DER KOMMUNIKATION EINES NETZWERKKNOTENS**
METHOD AND SYSTEM FOR AUTHORISING THE COMMUNICATION OF A NETWORK NODE
PROCÉDÉ ET SYSTÈME D'AUTORISATION DE LA COMMUNICATION D'UN NOEUD DE RÉSEAU

(30) Priorität: 22.03.2018 DE 102018204367
(43) Veröffentlichungstag der Anmeldung: 27.01.2021
(73) Patentinhaber: Siemens Schweiz AG, 8047 Zürich (CH)
(72) Erfinder: FREY, Christian, 6314 Unterägeri (CH); KONRAD, Hilmar, 6340 Baar (CH)
(74) Vertreter: Siemens Patent Attorneys
(86) Internationale Anmeldenummer: PCT/EP2019/054917
(87) Internationale Veröffentlichungsnummer: WO 2019/179739

(56) Entgegenhaltungen:
- CN-A- 104 936 266
- CN-A- 107 613 544
- US-A1- 2016 344 559
- US-A1- 2017 171 204
- US-A1- 2017 295 447

## Beschreibung

Die Erfindung betrifft ein Verfahren und System zur Autorisierung der Kommunikation eines Netzwerkknotens eines Kommunikationsnetzwerkes. Weiterhin betrifft die Erfindung einen Netzwerkknoten eines Kommunikationsnetzwerkes.

Die Vernetzung von Gegenständen und Geräten untereinander und mit dem Internet durchdringt immer mehr den Alltag, sowohl im privaten als auch im industriellen Umfeld. Beim sogenannten Internet der Dinge bilden internetfähige Geräte (sog. IoT-Devices) ein Netzwerk, in dem sie über geeignete Kommunikationsverbindungen (z.B. WLAN) untereinander bzw. mit dem Internet kommunizieren.

Viele auf dem Markt vorhandene IoT-Geräte weisen wenige bis gar keine Sicherheitsmechanismen auf und enthalten teilweise diverse Schwachstellen und stellen damit eine potentielle Gefahr für deren Anwender und Dritte dar. Die Zahl böswilliger Attacken auf internetbasierte Systeme, Geräte und Anwendungen steigt derzeit sprunghaft an.

Die chinesische Patentanmeldung CN104936266A offenbart ein Verfahren für den Netzwerkzugang für Internet-of-Things-Geräte (IoT-Geräte), wobei ein IoT-Gerät über Nahfeldkommunikation (NFC) Netzwerkverbindungsparameter für den Netzwerkzugang erhält.

Die amerikanische Patentanmeldung US20160344559A1 offenbart ein Verfahren und eine Vorrichtung werden für eine initiale Zertifizierung einer Registrierung in einem drahtlosen Kommunikationssystem, wobei ein erstes mobiles Gerät eine erste drahtlose Verbindung mit einer Infrastruktur aufbaut und eine zweite drahtlose Verbindung mit einem zweiten mobilen Gerät, wobei das erste mobile Gerät vom zweiten mobilen Gerät eine erste Zertifizierungsanforderung empfängt, wobei die erste Zertifizierungsanforderung eine Anforderung für ein digitales Zertifikat für das zweite mobile Gerät umfasst und erste biometrische Daten, die mit einem Benutzer des ersten des ersten mobilen Geräts zugeordnet sind. Das erste mobile Gerät erhält weiterhin zweite biometrische Daten, die mit einem Benutzer des zweiten mobilen Geräts zugeordnet sind, und übermittelt eine zweite Zertifizierungsanforderung an die Infrastruktur, die die Anforderung des digitalen Zertifikats für das zweite mobile Gerät und die ersten und zweiten biometrischen Daten enthält. Das erste mobile Gerät empfängt dann, von der Infrastruktur das digitale Zertifikat für das zweite mobile Gerät und leitet es an das zweite mobile Gerät weiter.

Die chinesische Patentanmeldung CN107613544A offenbart ein Verfahren und eine Vorrichtung für Netzwerkverbindungen auf dem Gebiet des Internets der Dinge, insbesondere für ein Netzwerkverbindungsverfahren eines Internet-der-Dinge-Gerätes (I-oT-Gerät) und eines drahtlosen Routers, wobei der drahtlose Router einen NFC-Chip aufweist, wobei der NFC-Chip online Authentifizierungsinformation an das IoT-Gerät sendet, wenn sich das IoT-Gerät in Arbeitsdistanz des NFC-Chips befindet.

Die amerikanische Patentanmeldung US2017295447A1 offenbart Systeme und Methoden zur Konfiguration und Verwaltung einer beliebigen Anzahl von heterogenen Geräten, wobei eine gemeinsame Gerätekonfiguration gleichzeitig auf eine ausgewählte Gruppe von ansonsten inkompatiblen heterogenen Geräten angewendet wird, die unterschiedliche Kommunikationsprotokolle und Betriebssysteme verwenden.

Bekannt ist die Verwendung von proprietären Schnittstellen zu den verbauten Geräten durch Nutzung von Herstellerwerkzeugen, wie z.B. über eine Serviceschnittstelle. Bekannt ist weiterhin die Verwendung von Zertifikaten, um eine gesicherte Datenübertragung zwischen den IoT-Geräten und/oder einer Zentrale bzw. Serviceeinheit zu gewährleisten.

Proprietäre Schnittstellen sind unflexibel und erfordern zusätzliche Werkzeuge auf Seite eines Benutzers. Zertifikate können über Hackerangriffe von einem Zertifizierungsserver gestohlen und missbraucht werden. Dies häufig ohne Kenntnis des Betreibers der IoT-Infrastruktur bzw. eines Benutzers.

Es ist daher die Aufgabe der vorliegenden Erfindung, ein Verfahren und ein System für einen benutzerfreundlichen und gesicherten Zugriff auf IoT-Geräte bereitzustellen.

Die gestellte Aufgabe wird mit den Merkmalen der unabhänigen Ansprüche gelöst. Weitere vorteilhafte Ausgestaltungen sind in den abhändigen Ansprüchen beschrieben.

Die Aufgabe wird gelöst durch ein Verfahren zur Autorisierung der Kommunikation (z.B. Datenverbindung) eines Netzwerkknotens (z.B. IoT-Gerät) eines Kommunikationsnetzwerkes (z.B. IP-Netzwerk), wobei die Kommunikation des Netzwerkknotens (Daten/Signale empfangen/senden zu anderen Netzwerkknoten / zur Cloud / zum Smartphone) nur erlaubt ist, wenn der Netzwerkknoten nach einer erfolgten NFC-Verbindung (z.B. Bluetooth, RFID) mit einem definierten mobilen Kommunikationsendgerät (z.B. Smartphone) eine Autorisierung erhält. Mit Vorteil handelt es sich beim mobilen Kommunikationsendgerät um ein entsprechend zertifiziertes mobiles Kommunikationsendgerät. Eine Kommunikation umfasst z.B. das Empfangen oder das Senden von Daten, Dateien, Signalen, Befehlen, Parametern zu anderen Netzwerkknoten, zu einem Panel, zu einer Cloud oder zum mobilen Kommunikationsendgerät. Ein Netzwerkknoten (z.B. IoT-Gerät) ist nur dann autorisiert eine Kommunikation (z.B. ein Firmware Update oder ein Update von Betriebsparametern des IoT-Geräts) durchzuführen, wenn der Netzwerkknoten eine NFC-Verbindung (Nahfeldkommunikation, z.B. Bluetooth, RFID) mit einem definierten mobilen Kommunikationsendgerät (z.B. ein mobiles Kommunikationsendgerät aus einer Menge von zertifizierten mobilen Kommunikationsendgeräten) eingegangen ist.

Mit Vorteil erfolgt eine Autorisierung des Netzwerkknotens für eine Kommunikation zusätzlich zur eingerichteten NFC-Verbindung zwischen Netzwerkknoten und mobilem Kommunikationsendgerät zusätzlich noch durch eine weitere Autorisierung des Netzwerkknotens (z.B. durch eine Freigabe durch eine Leitstelle, einen weiteren Knoten im Netzwerk oder durch die Anmeldung des Gerätes im IP-Netzwerk selbst (durch entsprechende Zugangsautorisierung)). Diese Zweifaktoren-Verifikation bzw. Zweifaktoren-Autorisierung bietet ein hohes Mass an Sicherheit für den Zugriff auf den Netzwerkknoten. Bei der Zweifaktoren-Verifikation bzw. Zweifaktoren-Autorisierung erfolgt mit Vorteil eine erste Verifikation bzw. Autorisierung durch den IP-Zugriff selbst (virtuelle Komponente). Eine zweite Verifikation bzw. Autorisierung erfolgt z.B. über eine physische Komponente (z.B. durch eine PIN-Eingabe zur Anmeldung beim IP-Netzwerk in dem sich der Netzwerkknoten befindet). Erst wenn erste und zweite Verifikation bzw. Autorisierung erfolgt sind, kann die Datenübermittlung für den Netzwerkknoten aktiviert werden. Mit Vorteil wird der physische Zugang zum Netzwerkknoten (z.B. IoT-Gerät in einem Gebäude) durch ein Zutrittskontrollsystem gesichert werden. Dies würde eine Dreifaktoren-Verifikation bzw. Dreifaktoren-Autorisierung ermöglichen bzw. bedeuten.

Mit Vorteil wird das erfindungsgemässe Verfahren für die Installation und/oder für die Wartung von Netzwerkknoten in einem Gebäude bzw. innerhalb einer Gebäudeautomatisierung verwendet. Netzwerkknoten können z.B. IoT-Geräte sein, oder Gefahren- und/oder Brandmelder, Controller für Sensoren und/oder Aktoren, Stellantriebe oder Busteilnehmer eines Installationsbuses (z.B. KNX-Bus).

Mit Vorteil wird der Zugriff auf den Netzwerkknoten (z.B. IoT-Gerät) nur dann freigegeben, wenn eine direkte Datenkommunikation zwischen dem Netzwerkknoten mit einem mobilen Kommunikationsendgerät (z.B. Smartphone) in unmittelbarer Nähe (z.B. in einem definierten maximalen Abstand von ca. 2 bis 3m im Umkreis des Netzwerkknotens) möglich ist, wie z.B. mittels NFC oder Bluetooth. Wenn eine räumliche Nähe festgestellt ist, wird der Zugriff freigegeben, sodass das Gerät externe Daten über den Server bzw. über die Cloud in den gesicherten Speicherbereich ablegen kann. Alternativ können die externen Daten auch direkt mittels NFC oder Bluetooth vom mobilen Kommunikationsendgerät auf den Netzwerkknoten übertragen werden.

Mit Vorteil wird zur Erhöhung der Sicherheit eine Anfrage an eine Cloud (Cloud-Server bzw. Cloud Service Application) zum Aufspielen externer Daten verschlüsselt an den entsprechenden Netzwerkknoten übertragen. Der entsprechende Netzwerkknoten gibt den gesicherten Speicherbereich nur dann frei, wenn die verschlüsselte Anfrage gültig ist und zudem der entsprechende Netzwerkknoten in einer Kommunikationsverbindung mit dem mobilen Kommunikationsendgerät ist. Der externen Daten können dann direkt vom mobilen Kommunikationsendgerät auf den Netzwerkknoten übertragen werden oder über die Cloud.

Eine Nahfeldkommunikation (Near Field Communication, NFC) zwischen dem mobilen Kommunikationsendgerät und dem Netzwerkknoten kann z.B. über RFID (Radio Frequency Identification) oder durch Bluetooth hergestellt werden. Eine Nahfeldkommunikation erfordert, dass die beiden zu verbindenden Geräte räumlich nahe (z.B. 2-3m) beieinander sind. Wenn das mobile Kommunikationsendgerät und der Netzwerkknoten eine NFC-Verbindung untereinander installiert haben, kann dies als Nachweis angesehen werden, dass ihre jeweilige geographische Position im Wesentlichen (z.B. im Abstand von 2-3m) übereinstimmt.

Eine erste vorteilhafte Ausgestaltung der Erfindung liegt darin, dass der Netzwerkknoten vor der Kommunikation die Autorisierung vom mobilen Kommunikationsendgerät erhält. Nach einer erfolgten NFC-Verbindung zwischen dem Netzwerkknoten und dem mobilen Kommunikationsendgerät kann das mobile Kommunikationsendgerät eine Autorisierungsmeldung, ein Autorisierungssignal, oder einen Autorisierungscode (z.B. vierstellige oder sechsstellige PIN) an den Netzwerkknotensenden. Dies erfolgt mit Vorteil über die eingerichtete NFC-Verbindung. Prinzipiell kann die Autorisierung vom mobilen Kommunikationsendgerät an den Netzwerkknoten aber auch über einen anderen Kommunikationsweg (z.B. über das IP-Netzwerk des Netzwerkknotens) erfolgen.

Eine weitere vorteilhafte Ausgestaltung der Erfindung liegt darin, dass der Netzwerkknoten vor der Kommunikation die Autorisierung durch einen entsprechend eingerichteten Cloud-Server bzw. eine entsprechende Cloud Service Application erhält. Vom mobilen Kommunikationsendgerät wird der Cloud-Server bzw. die Cloud Service Application über eine entsprechende Kommunikationsverbindung (z.B. IP-Verbindung) aufgefordert, eine Autorisierung (z.B. eine Autorisierungsmeldung oder ein Autorisierungssignal) an den entsprechenden Netzwerkknoten zu senden. Dadurch wird die Sicherheit zusätzlich erhöht.

Eine weitere vorteilhafte Ausgestaltung der Erfindung liegt darin, dass der Netzwerkknoten nach Erhalt der Autorisierung das mobile Kommunikationsendgerät über NFC-Verbindung auffordert, eine Quittierung (z.B. Acknowledgement) an den Netzwercknoten zu senden. Dies sorgt für eine zusätzliche Datensicherheit.

Eine weitere vorteilhafte Ausgestaltung der Erfindung liegt darin, dass der Netzwerkknoten nach Erhalt der Autorisierung das mobile Kommunikationsendgerät über NFC-Verbindung auffordert, eine Quittierung (z.B. Acknowledgement) an einen Zertifizierungsserver zu senden. Auch dies sorgt für eine zusätzliche Datensicherheit.

Eine weitere vorteilhafte Ausgestaltung der Erfindung liegt darin, dass der Netzwerkknoten während einer Kommunikation in einer permanenten NFC-Verbindung mit dem mobilen Kommunikationsendgerät steht. Dies erhöht weiterhin die Sicherheit des Zugriffs auf den Netzwerkknoten und die Sicherheit der Kommunikation mit dem Netzwerkknoten. Das mobile Kommunikationsendgerät muss z.B. für die gesamte Dauer eines Firmware-Updates über eine NFC-Verbindung mit dem entsprechenden Netzwerkknoten stehen.

Eine weitere vorteilhafte Ausgestaltung der Erfindung liegt darin, dass das mobile Kommunikationsendgerät eine Autorisierung (Token, Zertifikat; eigentlich Autorisierung zur Autorisierung) durch einen Zertifizierungsserver (z.B. vertrauenswürdiger Server) erhält. Ein Zertifizierungsserver kann z.B. über ein geeignetes asymmetrisches Verschlüsselungsverfahren digitale Zertifikate erstellen und diese auf mobile Kommunikationsendgeräte übertragen. Mit Vorteil ist ein digitales Zertifikat nur für eine bestimmte Zeitspanne und/oder für eine definierte Anzahl von Autorisierungen und/oder für definierte Netzwerkknoten (z.B. Netzwerkknoten in einem bestimmten Gebäudebereich (z.B. ein bestimmter Raum) gültig. Dies erhöht weiterhin die Sicherheit des Zugriffs auf den Netzwerkknoten und die Sicherheit der Kommunikation mit dem Netzwerkknoten.

Eine weitere vorteilhafte Ausgestaltung der Erfindung liegt darin, dass eine Kommunikation des Netzwerkknotens nur erfolgt, wenn sich das mobile Kommunikationsendgerät innerhalb einer definierten Entfernung (z.B. Höchstabstand 3-4m, insbesondere 2m) zum Netzwerkknoten befindet. Die geographische Position des Netzwerkknotens kann z.B. in einem Gebäudeinformationsmodell (BIM, Building Information Model) in einer entsprechend eingerichteten Datenbank hinterlegt ein. Die geographische Position des mobilen Kommunikationsmodells kann z.B. über ein Positionsbestimmungssystem (satellitengestützt (z.B. GPS) oder durch ein Indoor-Positionsbestimmungssystem (IPS, z.B. basierend auf BLE (Bluetooth Low Energy Beacons)) ermittelt werden. Die Bestimmung des Abstandes und die Autorisierung zur Kommunikation können z.B. im mobilen Kommunikationsendgerät oder in einer Cloud Application erfolgen. Dies erhöht weiterhin die Sicherheit des Zugriffs auf den Netzwerkknoten und die Sicherheit der Kommunikation mit dem Netzwerkknoten.

Eine weitere vorteilhafte Ausgestaltung der Erfindung liegt darin, dass nur nach einer erfolgten Autorisierung ein Schreibzugriff auf einen Speicher des autorisierten Netzwercknotens (z.B. über weitere Netzwerkknoten oder über das mobile Kommunikationsendgerät) erlaubt wird. Der Schreibzugriff kann z.B. über weitere Netzwerkknoten, über das mobile Kommunikationsendgerät oder über einen Server erfolgen. Mit Vorteil befindet sich der Server in einer Cloud-Infrastruktur und ist für eine Kommunikation mit dem Netzwerkknoten entsprechend eingerichtet.

Die Aufgabe wird weiterhin gelöst durch ein System zur Autorisierung der Kommunikation von Netzwerkknoten (z.B. IoT-Gerät) innerhalb eines Kommunikationsnetzwerkes (z.B. IP-Netzwerk), wobei ein Netzwerkknoten dazu eingerichtet ist, dass er eine Kommunikation nur durchführen kann, wenn er nach einer erfolgten NFC-Verbindung mit einem definierten (zertifizierten) mobilen Kommunikationsendgerät (z.B. Smartphone) eine Autorisierung erhält. Mit Vorteil handelt es sich beim mobilen Kommunikationsendgerät um ein entsprechend zertifiziertes mobiles Kommunikationsendgerät. Eine Kommunikation umfasst z.B. das Empfangen oder das Senden von Daten, Dateien, Signalen, Befehlen, Parametern zu anderen Netzwerkknoten, zu einem Panel, zu einer Cloud oder zum mobilen Kommunikationsendgerät. Ein Netzwerkknoten (z.B. IoT-Gerät) ist nur dann autorisiert eine Kommunikation (z.B. ein Firmware Update oder ein Update von Betriebsparametern des IoT-Geräts) durchzuführen, wenn der Netzwerkknoten eine NFC-Verbindung (Nahfeldkommunikation, z.B. Bluetooth, RFID) mit einem definierten mobilen Kommunikationsendgerät (z.B. ein mobiles Kommunikationsendgerät aus einer Menge von zertifizierten mobilen Kommunikationsendgeräten) eingegangen ist.

Mit Vorteil erfolgt eine Autorisierung des Netzwerkknotens für eine Kommunikation zusätzlich zur eingerichteten NFC-Verbindung zwischen Netzwerkknoten und mobilem Kommunikationsendgerät zusätzlich noch durch eine weitere Autorisierung des Netzwerkknotens (z.B. durch eine Freigabe durch eine Leitstelle, einen weiteren Knoten im Netzwerk oder durch die Anmeldung des Gerätes im IP-Netzwerk selbst (durch entsprechende Zugangsautorisierung)). Diese Zweifaktoren-Verifikation bzw. Zweifaktoren-Autorisierung bietet ein hohes Mass an Sicherheit für den Zugriff auf den Netzwerkknoten. Bei der Zweifaktoren-Verifikation bzw. Zweifaktoren-Autorisierung erfolgt mit Vorteil eine erste Verifikation bzw. Autorisierung durch den IP-Zugriff selbst (virtuelle Komponente). Eine zweite Verifikation bzw. Autorisierung erfolgt z.B. über eine physische Komponente (z.B. durch eine PIN-Eingabe zur Anmeldung beim IP-Netzwerk, in dem sich der Netzwerkknoten befindet). Erst wenn erste und zweite Verifikation bzw. Autorisierung erfolgt sind, kann die Datenübermittlung für den Netzwerkknoten aktiviert werden. Mit Vorteil wird der physische Zugang zum Netzwerkknoten (z.B. IoT-Gerät in einem Gebäude) durch ein Zutrittskontrollsystem gesichert werden. Dies würde eine Dreifaktoren-Verifikation bzw. Dreifaktoren-Autorisierung ermöglichen bzw. bedeuten.

Mit Vorteil wird der Zugriff auf den Netzwerkknoten (z.B. IoT-Gerät) nur dann freigegeben, wenn eine direkte Datenkommunikation zwischen dem Netzwerkknoten mit einem mobilen Kommunikationsendgerät (z.B. Smartphone) in unmittelbarer Nähe (z.B. in einem definierten maximalen Abstand von ca. 2 bis 3m im Umkreis des Netzwerkknotens) möglich ist, wie z.B. mittels NFC oder Bluetooth. Wenn eine räumliche Nähe festgestellt ist, wird der Zugriff freigegeben, sodass das Gerät externe Daten über den Server bzw. über die Cloud in den gesicherten Speicherbereich ablegen kann. Alternativ können die externen Daten auch direkt mittels NFC oder Bluetooth vom mobilen Kommunikationsendgerät auf den Netzwerkknoten übertragen werden.

Mit Vorteil wird zur Erhöhung der Sicherheit eine Anfrage an eine Cloud (Cloud-Server bzw. Cloud Service Application) zum Aufspielen externer Daten verschlüsselt an den entsprechenden Netzwerkknoten übertragen. Der entsprechende Netzwerkknoten gibt den gesicherten Speicherbereich nur dann frei, wenn die verschlüsselte Anfrage gültig ist und zudem der entsprechende Netzwerkknoten in einer Kommunikationsverbindung mit dem mobilen Kommunikationsendgerät ist. Der externen Daten können dann direkt vom mobilen Kommunikationsendgerät auf den Netzwerkknoten übertragen werden oder über die Cloud.

Eine Nahfeldkommunikation (Near Field Communication, NFC) zwischen dem mobilen Kommunikationsendgerät und dem Netzwerkknoten kann z.B. über RFID (Radio Frequency Identification) oder durch Bluetooth hergestellt werden. Eine Nahfeldkommunikation erfordert, dass die beiden zu verbindenden Geräte räumlich nahe (z.B. 2-3m) beieinander sind. Wenn das mobile Kommunikationsendgerät und der Netzwerkknoten eine NFC-Verbindung untereinander installiert haben, kann dies als Nachweis angesehen werden, dass ihre jeweilige geographische Position im Wesentlichen (z.B. im Abstand von 2-3m) übereinstimmt.

Das erfindungsgemässe System lässt sich mit sowieso schon in einem Gebäude vorhandener Infrastruktur realisieren.

Netzwerkknoten können z.B. IoT-Geräte sein, oder Gefahrenund/oder Brandmelder, Controller für Sensoren und/oder Aktoren, oder Busteilnehmer eines Installationsbuses (z.B. KNX-Bus) .

Eine weitere vorteilhafte Ausgestaltung der Erfindung liegt darin, dass der Netzwerkknoten dazu eingerichtet ist, dass er während der Dauer einer Kommunikation in einer permanenten NFC-Verbindung mit dem mobilen Kommunikationsendgerät steht. Dies erhöht u.a. die Sicherheit während der Dauer einer Kommunikation (z.B. Datentransfer).

Eine weitere vorteilhafte Ausgestaltung der Erfindung liegt darin, dass der Netzwerkknoten nach erfolgter Autorisierung dazu eingerichtet ist, einen Schreibzugriff auf einen Speicher dieses autorisierten Netzwerkknotens (z.B. über weitere Netzwerkknoten, über einen Cloud-Server, oder über das mobile Kommunikationsendgerätes) zu erlauben. Dadurch ist u.a. ein hoher Schutz von Hackerangriffen oder Man-in-the-Middle-Attacken (MITM-Angriff, Mittelsmannangriff) auf den Netzwerkknoten sichergestellt.

Die Aufgabe wird weiterhin gelöst durch einen Netzwerkknoten eines Kommunikationsnetzwerkes (z.B. IP-Netzwerk), wobei der Netzwerkknoten dazu eingerichtet ist, dass er eine Kommunikation nur durchführen kann, wenn er nach einer erfolgten NFC-Verbindung mit einem definierten, mit Vorteil zertifizierten mobilen Kommunikationsendgerät (z.B. Smartphone) eine Autorisierung erhält. Entsprechend eingerichtete Netzwerkknoten weisen einen hohen Schutz vor einem unberechtigten Zugriff auf. Netzwerkknoten können z.B. IoT-Geräte sein, oder Gefahrenund/oder Brandmelder, Controller für Sensoren und/oder Aktoren, oder Busteilnehmer eines Installationsbuses (z.B. KNX-Bus) .

Eine weitere vorteilhafte Ausgestaltung der Erfindung liegt darin, dass es sich beim Netzwerkknoten um ein IoT-Gerät handelt. Bei einem IoT-Gerät (IoT steht für Internet of Things, Internet der Dinge) handelt sich um physische und/oder virtuelle Gegenstände, die untereinander und/oder mit dem Internet verbunden sind. Je nach Ausstattung (Hardware, Software, Prozessor, Speicher) können IoT-Geräte unterschiedlich leistungsfähig sein.

Eine weitere vorteilhafte Ausgestaltung der Erfindung liegt darin, dass der Netzwerkknoten nach erfolgter Autorisierung dazu eingerichtet ist, einen Schreibzugriff auf einen Speicher dieses autorisierten Netzwerkknotens (z.B. über weitere Netzwerkknoten, über einen Cloud-Server oder über das mobile Kommunikationsendgerätes) zu erlauben. Dadurch ist u.a. ein hoher Schutz von Hackerangriffen oder Man-in-the-Middle-Attacken (MITM-Angriff, Mittelsmannangriff) auf den Netzwerkknoten sichergestellt.

Die Erfindung sowie vorteilhafte Ausführungen der vorliegenden Erfindung werden am Beispiel der nachfolgenden Figuren erläutert. Dabei zeigen:
FIG 1 ein erstes beispielhaftes System zur Autorisierung der Kommunikation eines Netzwerkknotens eines Kommunikationsnetzwerkes,
FIG 2 ein zweites beispielhaftes System zur Autorisierung der Kommunikation eines Netzwerkknotens eines Kommunikationsnetzwerkes, und
FIG 3 ein beispielhaftes Flussdiagramm für ein Verfahren Autorisierung der Kommunikation eines Netzwerkknotens eines Kommunikationsnetzwerkes.

Damit IoT-Geräte (z.B. Internetfähige Geräte) in Institutionen eingesetzt werden können, müssen sie ein Minimum an Sicherheitskriterien erfüllen. Die Geräte müssen Update-Funktionen besitzen, und der Hersteller muss einen Update-Prozess anbieten. Wenn IoT-Lösungen (Lösungen zum Internet der Dinge) ein unzureichendes oder fehlendes Patch-Management (Behebung von Fehlern) mitbringen, können keine Schwachstellen behoben werden. Ersatzweise müssten die Sicherheitslücken anderweitig abgeschirmt werden. Dies kann sehr aufwendig werden und auch das ganze Nutzungskonzept eines IoT-Gerätes ad absurdum führen.

Bei der vorliegenden Erfindung geht es insbesondere um den gesicherten/autorisierten Zugriff auf im Gebäude verbaute sicherheitsrelevante Geräte, wie z.B. Rauchmelder, Alarming Devices, Stellantriebe für Rauchklappen, Löschventile etc. Denn sind ist die Datensicherheit gefährdet, hemmt das den technischen Fortschritt.

Mit der Verbreitung und dem Einzug der IoT-Technologie auch im Gebäudesektor besteht ein erhöhtes Sicherheitsrisiko zur Manipulation der verbauten sicherheitsrelevanten Infrastruktur. So kann das bewusste Auslösen eines Fehlalarms zu einer Evakuierung eines Hotels führen, was negative Folgen für das Hotel und für die Hotelbesucher zur Folge hat, wie z.B. Unfälle in Panik. Unter anderem kann das zu Lösegeldforderungen führen. Auch der Einsatzzweck kann durch nicht verifizierbare Veränderungen an den Geräten kompromittiert werden (Alarmauslösung eines Rauchmelders unterdrücken).

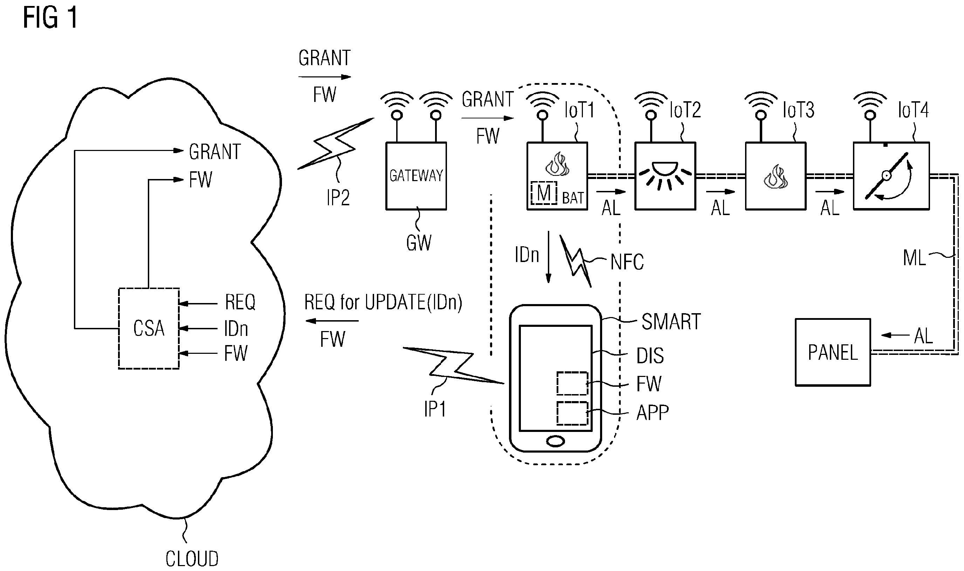

Figur 1 zeigt ein erstes beispielhaftes System zur Autorisierung der Kommunikation von Netzwerkknoten IoT1 - IoT4 (z.B. IoT-Gerät) innerhalb eines Kommunikationsnetzwerkes IP2 (z.B. IP-Netzwerk), wobei ein Netzwerkknoten IoT1 - IoT4 dazu eingerichtet ist, dass er eine Kommunikation nur durchführen kann, wenn er nach einer erfolgten NFC-Verbindung NFC (z.B. RFID, Bluetooth) mit einem definierten (mit Vorteil zertifizierten) mobilen Kommunikationsendgerät SMART (z.B. Smartphone, Tablet-Computer, PDA (Personal Digital Assistant) eine Autorisierung GRANT erhält. Ein Netzwerkknoten IoT1 - IoT4 kann nur dann mit anderen Netzwerkknoten IoT1 - IoT4, Cloud-Servern, oder Geräten (z.B. mobilen Kommunikationsendgeräten) kommunizieren, wenn sich ein mobiles Kommunikationsendgerät SMART (z.B. Smartphone, Tablet-Computer, PDA (Personal Digital Assistant) in unmittelbarer Nähe, d.h. in Reichweite für eine NFC-Verbindung (z.B. in einem Abstand von höchstens 3 - 5m, insbesondere höchstens 3m) befindet.

Beim Kommunikationsnetzwerk IP2 handelt es sich z.B. um ein IP-Netzwerk, das auf einem IP-Protokoll (Internet Protocol, z.B. IPv4 oder IPv6) basiert.

Beim einem Netzwerkknoten IoT1 - IoT4 handelt es sich mit Vorteil um ein internetfähiges IoT-Gerät. In Gebäuden z.B. um entsprechend eingerichtete Gefahren- oder Brandmelder, oder entsprechend eingerichtete Bedien- und Überwachungsstationen PANEL.

Mit Vorteil ist der Netzwerkknoten IoT1 - IoT4 dazu eingerichtet, dass nach erfolgter Autorisierung ein Schreibzugriff auf einen Speicher M (z.B. Flash-Speicher) des autorisierten Netzwerkknotens möglich ist. Der Schreibzugriff kann z.B. durch weitere Netzwerkknoten des IP-Netzwerkes IP2 erfolgen, und/oder über das mobile Kommunikationsendgerät SMART, und/oder durch eine Cloud Service Application CSA, die sich auf einem Cloud-Server in einer Cloud-Infrastruktur CLOUD befindet. Beim Schreibzugriff kann es sich z.B. um ein Firmware-Update FW oder um ein Update von Betriebsparametern des IoT-Geräts handeln.

Mit Vorteil handelt es sich beim Netzwerkknoten IoT1 - IoT4, PANEL um ein IoT-Gerät, das über eine IP-Verbindung IP2 mit anderen Geräten bzw. mit dem Internet verbunden ist.

Im beispielhaften System gemäss Figur 1 erhält das IoT-Gerät IoT1 erst dann eine Autorisierung GRANT für eine Kommunikation (z.B. Firmware-Update FW), wenn sich das mobile Kommunikationsendgerät SMART durch eine NFC-Verbindung NFC (Nahfeldkommunikation, z.B. RFID (Radio Frequency Identification) oder Bluetooth( z.B. BLE)) mit dem IoT-Gerät IoT1 verbunden hat. Für eine NFC-Verbindung muss sich das mobile Kommunikationsendgerät SMART in unmittelbarer räumlicher Nähe (z.B. innerhalb eines Abstandes von 5m, insbesondere 3m) des Gerätes IoT1 befinden. In der Darstellung gemäss Figur 1 ist die räumlichen Nähe durch die gestrichelte Linie dargestellt, innerhalb derer sich das mobile Kommunikationsendgerät SMART und das IoT-Gerät IoT1 befinden.

Das beispielhafte mobile Kommunikationsendgerät SMART umfasst eine entsprechende App APP zur Kommunikation mit einer Cloud Service Application CSA, sowie Firmware FW, die auf das Gerät IoT1 hochgeladen (Upload) werden soll. Auf dem Display DIS des mobilen Kommunikationsendgerätes SMART kann ein Benutzer (z.B. ein Inbetriebsetzer oder ein Wartungstechniker) entsprechende Bedieneingaben durchführen. Die App APP kann auch zur Legitimation bzw. Zertifizierung des mobilen Kommunikationsendgerätes SMART verwendet werden.

Das mobile Kommunikationsendgerät SMART sendet über eine entsprechende IP-Verbindung IP1 (Internet Protokoll Verbindung) eine Anforderung (Request) REQ für ein Update für das entsprechende Gerät IoTn an eine Cloud Service Application CSA, die durch eine Cloud-Infrastruktur CLOUD realisiert ist. Die Cloud Service Application CSA erhält den Request REQ, die Identifikation IDn für das entsprechende Gerät IoTn und die Firmware FW, die auf das entsprechende Gerät IoTn geladen werden soll. Durch die NFC-Verbindung NFC erhält das mobile Kommunikationsendgerät SMART die Identifikation IDn vom Gerät IoTn.

Im beispielhaften System gemäss Figur 1 erhält die Cloud Service Application CSA vom mobilen Kommunikationsendgerät SMART über die Kommunikationsverbindung IP1 (z.B. Internet, WLAN) die Anforderung (Request) REQ für ein durchzuführendes Update (Firmware-Update), die dazugehörige Firmware FW, und die Identifikation IDn für das Gerät IoTn auf das die Firmware FW geladen werden soll. Die Cloud Service Application CSA gibt eine Bewilligung bzw. Autorisierung GRANT für eine Kommunikation über die IP-Verbindung IP2 an das entsprechende Gerät IoTn. Weiterhin übermittelt die Cloud Service Application CSA die Firmware FW an das entsprechende IoT-Gerät, in der beispielhaften Darstellung gemäss Figur 1 an das Gerät IoT1.

Mit Vorteil ist die Cloud Service Application CSA in einer entsprechend eingerichteten Cloud-Infrastruktur CLOUD implementiert, z.B. auf einem entsprechend eingerichteten Server. Die Cloud Service Application CSA kann über ein Gateway GW auf das IP-Netz für die IP-Verbindung IP2 zugreifen oder aber auch direkt auf das entsprechende IoT-Gerät IoT1 - IoT4. Bei den IP-Verbindungen IP1, IP2 handelt es sich mit Vorteil um funkbasierte Verbindungen (z.B. WLAN).

Bei der beispielhaften Darstellung gemäss Figur 1 ist das IoT-Gerät IoT1 ein Brandmelder, der mit anderen Geräten IoT1 - I-oT4 über eine Melderlinie ML mit einer entsprechenden Kontrollstation oder Brandmeldezentrale PANEL (z.B. FS20-Zentrale) verbunden ist. Eine Alarmmeldung AL kann somit über die Melderlinie ML von einem Gerät IoT1 - IoT4 bis zur Zentrale PANEL weitergeleitet werden.

Mit Vorteil ist der Netzwerkknoten IoT1 - IoT4 dazu eingerichtet, dass er während der Dauer einer Kommunikation in einer permanenten NFC-Verbindung NFC mit dem mobilen Kommunikationsendgerät SMART steht.

Mit Vorteil ist der Netzwerkknoten nach erfolgter Autorisierung dazu eingerichtet, einen Schreibzugriff auf einen Speicher M dieses autorisierten Netzwerkknotens (z.B. über weitere Netzwerkknoten, die Cloud Service Application CSA, oder über das mobile Kommunikationsendgerät SMART) zu erlauben.

Mit Vorteil ist der Netzwerkknoten dazu eingerichtet, dass er eine Kommunikation nur durchführen kann, wenn er nach einer erfolgten NFC-Verbindung NFC mit einem definierten (zertifizierten) mobilen Kommunikationsendgerät SMART (z.B. Smartphone) eine Autorisierung GRANT erhält.

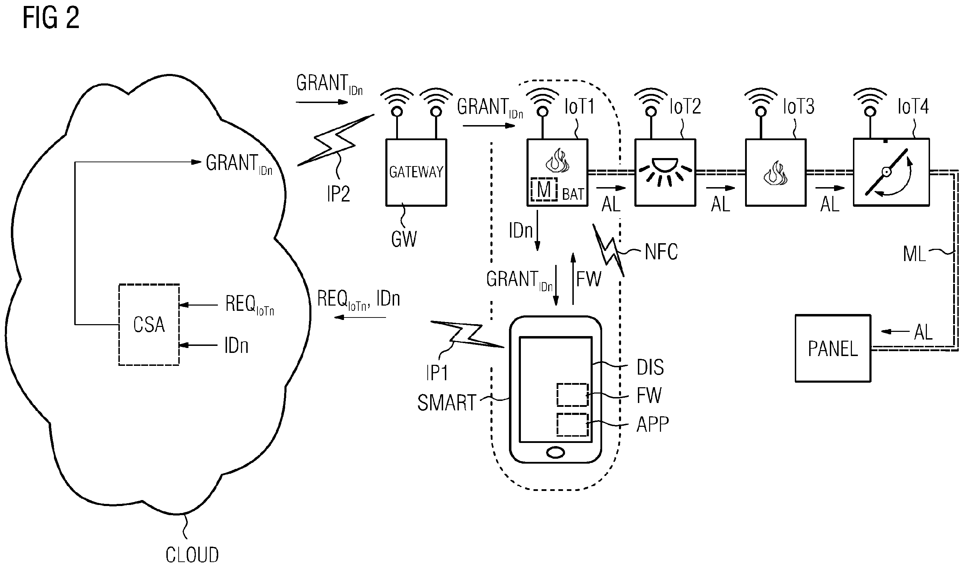

Figur 2 zeigt ein zweites beispielhaftes System zur Autorisierung der Kommunikation von Netzwerkknoten IoT1 - IoT4 (z.B. IoT-Gerät) innerhalb eines Kommunikationsnetzwerkes IP2 (z.B. IP-Netzwerk), wobei ein Netzwerkknoten IoT1 - IoT4 dazu eingerichtet ist, dass er eine Kommunikation nur durchführen kann, wenn er nach einer erfolgten NFC-Verbindung NFC (z.B. RFID, Bluetooth) mit einem definierten (mit Vorteil zertifizierten) mobilen Kommunikationsendgerät SMART (z.B. Smartphone, Tablet-Computer, PDA (Personal Digital Assistant) eine Autorisierung GRANT erhält. Ein Netzwerkknoten IoT1 - IoT4 kann nur dann mit anderen Netzwerkknoten IoT1 - IoT4, Cloud-Servern, oder Geräten (z.B. mobilen Kommunikationsendgeräten) kommunizieren, wenn sich ein mobiles Kommunikationsendgerät SMART (z.B. Smartphone, Tablet-Computer, PDA (Personal Digital Assistant) in unmittelbarer Nähe, d.h. in Reichweite für eine NFC-Verbindung (z.B. in einem Abstand von höchstens 3 - 5m, insbesondere höchstens 3m) befindet.

Beim Kommunikationsnetzwerk IP2 handelt es sich z.B. um ein IP-Netzwerk, das auf einem IP-Protokoll (Internet Protocol, z.B. IPv4 oder IPv6) basiert.

Beim einem Netzwerkknoten IoT1 - IoT4 handelt es sich mit Vorteil um ein internetfähiges IoT-Gerät. In Gebäuden z.B. um entsprechend eingerichtete Gefahren- oder Brandmelder, oder entsprechend eingerichtete Bedien- und Überwachungsstationen PANEL.

Mit Vorteil ist der Netzwerkknoten IoT1 - IoT4 dazu eingerichtet, dass nach erfolgter Autorisierung ein Schreibzugriff auf einen Speicher M (z.B. Flash-Speicher) des autorisierten Netzwerkknotens möglich ist. Der Schreibzugriff kann z.B. durch weitere Netzwerkknoten des IP-Netzwerkes IP2 erfolgen, und/oder über das mobile Kommunikationsendgerät SMART, und/oder durch eine Cloud Service Application CSA, die sich auf einem Cloud-Server in einer Cloud-Infrastruktur CLOUD befindet. Beim Schreibzugriff kann es sich z.B. um ein Firmware-Update FW oder um ein Update von Betriebsparametern des IoT-Geräts handeln.

Mit Vorteil handelt es sich beim Netzwerkknoten IoT1 - IoT4, PANEL um ein IoT-Gerät, das über eine IP-Verbindung IP2 mit anderen Geräten bzw. mit dem Internet verbunden ist.

Im beispielhaften System gemäss Figur 2 erhält das IoT-Gerät IoT1 erst dann eine Autorisierung GRANT_{IDn} für eine Kommunikation (z.B. Firmware-Update FW), wenn sich das mobile Kommunikationsendgerät SMART durch eine NFC-Verbindung NFC (Nahfeldkommunikation, z.B. RFID (Radio Frequency Identification) oder Bluetooth( z.B. BLE)) mit dem IoT-Gerät IoT1 verbunden hat. Für eine NFC-Verbindung muss sich das mobile Kommunikationsendgerät SMART in unmittelbarer räumlicher Nähe (z.B. innerhalb eines Abstandes von 5m, insbesondere 3m) des Gerätes IoT1 befinden. In der Darstellung gemäss Figur 2 ist die räumlichen Nähe durch die gestrichelte Linie dargestellt, innerhalb derer sich das mobile Kommunikationsendgerät SMART und das IoT-Gerät IoT1 befinden.

Das beispielhafte mobile Kommunikationsendgerät SMART umfasst eine entsprechende App APP zur Kommunikation mit einer Cloud Service Application CSA, sowie Firmware FW, die auf das Gerät IoT1 hochgeladen (Upload) werden soll. Auf dem Display DIS des mobilen Kommunikationsendgerätes SMART kann ein Benutzer (z.B. ein Inbetriebsetzer oder ein Wartungstechniker) entsprechende Bedieneingaben durchführen. Die App APP kann auch zur Legitimation bzw. Zertifizierung des mobilen Kommunikationsendgerätes SMART verwendet werden.

Das mobile Kommunikationsendgerät SMART sendet über eine entsprechende IP-Verbindung IP1 (Internet Protokoll Verbindung) eine Anforderung (Request) REQ_{IoTn} für ein Update für das entsprechende Gerät IoTn an eine Cloud Service Application CSA, die durch eine Cloud-Infrastruktur CLOUD realisiert ist. Die Cloud Service Application CSA erhält den Request REQ_{IoTn}, die Identifikation IDn für das entsprechende Gerät IoTn auf das die Firmware FW geladen werden soll. Durch die NFC-Verbindung NFC erhält das mobile Kommunikationsendgerät SMART die Identifikation IDn vom Gerät IoTn.

Im beispielhaften System gemäss Figur 2 erhält die Cloud Service Application CSA vom mobilen Kommunikationsendgerät SMART über die Kommunikationsverbindung IP1 (z.B. Internet, WLAN) die Anforderung (Request) REQ_{IoTn} für ein durchzuführendes Update (Firmware-Update) und die Identifikation IDn für das Gerät IoTn, auf das die Firmware FW geladen werden soll. Die Cloud Service Application CSA gibt eine Bewilligung bzw. Autorisierung GRANT_{IDn} für eine Kommunikation über die IP-Verbindung IP2 an das entsprechende Gerät IoTn. Die Cloud Service Application CSA kann über ein Gateway GW auf das IP-Netz für die IP-Verbindung IP2 zugreifen oder aber auch direkt auf das entsprechende IoT-Gerät IoT1 - IoT4. Bei den IP-Verbindungen IP1, IP2 handelt es sich mit Vorteil um funkbasierte Verbindungen (z.B. WLAN). Mit Vorteil ist die Cloud Service Application CSA in einer entsprechend eingerichteten Cloud-Infrastruktur CLOUD implementiert, z.B. auf einem entsprechend eingerichteten Server.

Beim beispielhaften System gemäss Figur 2 sendet das Gerät I-oT1, nachdem es die Autorisierung GRANT_{IDn} von der Cloud Service Application CSA erhalten hat, weiter an das mobile Kommunikationsendgerät SMART, mit dem es in einer NFC-Verbindung NFC steht. Nachdem das mobile Kommunikationsendgerät SMART die Autorisierung GRANT_{IDn} vom IoT-Gerät IoT1 erhalten hat, sendet das mobile Kommunikationsendgerät SMART die Firmware FW über die NFC-Verbindung NFC an das IoT-Gerät IoT1.

Bei der beispielhaften Darstellung gemäss Figur 2 ist das IoT-Gerät IoT1 ein Brandmelder, der mit anderen Geräten IoT1 - I-oT4 über eine Melderlinie ML mit einer entsprechenden Kontrollstation oder Brandmeldezentrale PANEL (z.B. FS20-Zentrale) verbunden ist. Eine Alarmmeldung AL kann somit über die Melderlinie ML von einem Gerät IoT1 - IoT4 bis zur Zentrale PANEL weitergeleitet werden.

Mit Vorteil ist der Netzwerkknoten IoT1 - IoT4 dazu eingerichtet, dass er während der Dauer einer Kommunikation in einer permanenten NFC-Verbindung NFC mit dem mobilen Kommunikationsendgerät SMART steht.

Mit Vorteil ist der Netzwerkknoten nach erfolgter Autorisierung dazu eingerichtet, einen Schreibzugriff auf einen Speicher M dieses autorisierten Netzwerkknotens (z.B. über weitere Netzwerkknoten, die Cloud Service Application CSA, oder über das mobile Kommunikationsendgerät SMART) zu erlauben.

Mit Vorteil ist der Netzwerkknoten dazu eingerichtet, dass er eine Kommunikation nur durchführen kann, wenn er nach einer erfolgten NFC-Verbindung NFC mit einem definierten (zertifizierten) mobilen Kommunikationsendgerät SMART (z.B. Smartphone) eine Autorisierung GRANT_{IDn} erhält.

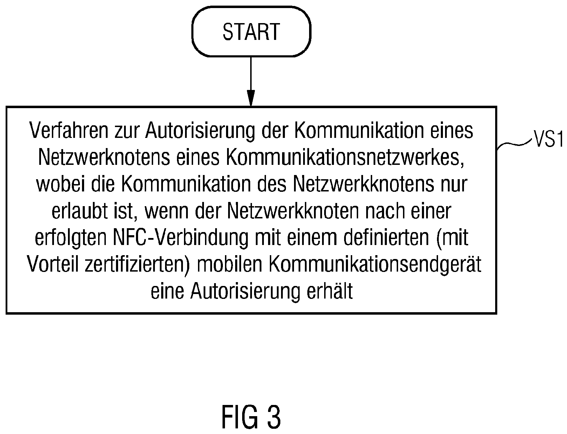

Figur 3 zeigt ein beispielhaftes Flussdiagramm für ein Verfahren Autorisierung der Kommunikation (z.B. Datenverbindung, Daten senden oder empfangen) eines Netzwerkknotens (z.B. IoT-Gerät) eines Kommunikationsnetzwerkes (z.B. IP-Netzwerk), wobei die Autorisierung zur Kommunikation des Netzwerkknotens nur dann erfolgt, wenn der Netzwerkknoten eine NFC-Verbindung mit einem definierten (mit Vorteil zertifizierten) mobilen Kommunikationsendgerät (z.B. Smartphone) eingegangen ist.

Mit Vorteil erhält der Netzwerkknoten vor der Kommunikation die Autorisierung durch einen entsprechend eingerichteten Cloud-Server.

Optional erhält der Netzwerkknoten vor der Kommunikation die Autorisierung vom mobilen Kommunikationsendgerät. Das mobile Kommunikationsendgerät erhält dazu die Autorisierung durch einen vertrauenswürdigen Zertifizierungsserver.

Mit Vorteil fordert der Netzwerkknoten, nach Erhalt der Autorisierung, vom mobilen Kommunikationsendgerät eine Quittierung an den Netzwerkknoten über die NFC-Verbindung zu senden.

Mit Vorteil fordert der Netzwerkknoten, nach Erhalt der Autorisierung, das mobile Kommunikationsendgerät dazu auf, eine Quittierung an einen Zertifizierungsserver über die NFC-Verbindung zu senden.

Mit Vorteil steht der Netzwerkknoten während der Dauer einer Kommunikation in einer permanenten (durchgehenden, d.h. zeitlich nicht unterbrochenen) NFC-Verbindung mit dem mobilen Kommunikationsendgerät.

Mit Vorteil erhält das mobile Kommunikationsendgerät eine Autorisierung (Token, Zertifikat; eigentlich Autorisierung zur Autorisierung) durch einen Zertifizierungsserver. Dies kann z.B. durch einen Download eines entsprechenden Zertifikats vom Zertifizierungsserver erfolgen.

Mit Vorteil erfolgt eine Kommunikation des Netzwerkknotens nur, wenn sich das mobile Kommunikationsendgerät innerhalb einer definierten Entfernung (z.B. 3-4m) zum Netzwerkknoten befindet.

Mit Vorteil erfolgt nur nach einer erfolgten Autorisierung ein Schreibzugriff auf einen Speicher des autorisierten Netzwercknotens (z.B. über weitere Netzwerkknoten oder über das mobile Kommunikationsendgerät).

Im Prinzip beruht das erfinderische Verfahren auf dem Verfahrensschritt:
(VS1) Verfahren zur Autorisierung der Kommunikation eines Netzwerkknotens eines Kommunikationsnetzwerkes, wobei die Kommunikation des Netzwerkknotens nur erlaubt ist, wenn der Netzwerkknoten nach einer erfolgten NFC-Verbindung mit einem definierten (mit Vorteil zertifizierten) mobilen Kommunikationsendgerät eine Autorisierung erhält.

Dieser Verfahrensschritt kann durch eine sowieso schon in einem Gebäude vorhandene Infrastruktur realisiert werden.

Zum Schützen einer IoT-Infrastruktur (Internet of Things, Internet der Dinge) ist bekanntlich eine umfassende Sicherheitsstrategie erforderlich. Diese Strategie muss folgende Bereiche abdecken: das Sichern von Daten in der Cloud, das Schützen der Integrität der Daten bei der Übertragung über das öffentliche Internet sowie das sichere Bereitstellen von Geräten. Jede Ebene leistet ihren eigenen Beitrag zur Sicherheit der Gesamtinfrastruktur, und die Beiträge bauen aufeinander auf und ergänzen sich. Die gravierendsten Angriffe gegen die IoT-Infrastruktur selbst beginnen mit einem direkten datentechnischen Zugriff auf die IoT-Geräte vor Ort in der direkten Umgebung des jeweiligen IoT-Geräts.

Die vorliegende Erfindung verhindert insbesondere einen direkten datentechnischen Zugriff von aussen auf die IoT-Geräte.

Erfindungsgemäss erfolgt ein datentechnischer Zugriff (direkt oder über den Server bzw. die Zentrale) auf das IoT-Gerät nur dann, wenn eine direkte Datenkommunikation mit dem verbauten IoT-Gerät mit einem Smartphone in unmittelbarer Nähe (ca. 2 bis 3m im Umkreis des IoT-Geräts) möglich ist, wie z.B. mittels NFC oder Bluetooth.

Wenn über die NFC-Verbindung eine räumliche Nähe festgestellt ist, wird der Zugriff freigegeben, sodass das Gerät externe Daten über einen entfernten Server bzw. über die Cloud in einen gesicherten Speicherbereich (z.B. Flash-Speicher) ablegen kann. Alternativ können die externen Daten auch direkt mittel NFC oder Bluetooth vom Smartphone auf das IoT-Gerät übertragen werden.

Zur Erhöhung der Sicherheit wird eine Anfrage an die Cloud zum Aufspielen externer Daten verschlüsselt an die IoT-Geräte übertragen. Das betreffende Gerät gibt den gesicherten Speicherbereich nur dann frei, wenn die verschlüsselte Anfrage gültig ist und zudem das IoT-Gerät zudem in einer Kommunikationsverbindung mit dem Smartphone ist. Der externen Daten können dann direkt vom Smartphone auf das IoT-Gerät übertragen werden oder über die Cloud.

Durch das erfindungsgemässe Verfahren ist ein erhöhtes Mass an Sicherheit für den Zugriff auf den gesicherten Speicherbereich eines IoT-Gerätes möglich. Neben der virtuellen Komponente (IP-Zugriff) ist eine physische Komponente (Standort) erforderlich, um die Datenübermittlung zu aktivieren. Der physische Zugang zum Gerät kann zudem weiter durch Zutrittskontrollsysteme gesichert werden.

Durch das erfindungsgemässe Verfahren und den gesicherten Zugriff auf einen Cloud-Server bzw. auf eine Cloud Service Application (z.B. PKI-Login) müssen künftig keine Passwörter mehr eingegeben oder komplizierte Konfigurationen vorgenommen werden.

Das erfindungsgemässe Verfahren und das erfindungsgemässe System zur Autorisierung der Kommunikation eines Netzwerkknotens eines Kommunikationsnetzwerkes sind insbesondere für Anwendungen mit hohen Sicherheitsanforderungen geeignet. So sind das erfindungsgemässe Verfahren und das erfindungsgemässe System insbesondere für die Inbetriebnahme und die Wartung oder den Test von IoT-Geräten mit hohen Sicherheitsanforderungen oder in Umgebungen mit hohen Sicherheitsanforderungen bzw. mit sensibler Infrastruktur (z.B. bei Banken, Gefängnissen, Schutzräumen, militärischen Einrichtungen, Katastrophenschutzeinrichtungen, Nuklearanlagen, Elektrizitätswerke) geeignet. Bei den IoT-Geräten kann es sich z.B. um Brand- oder Gefahrenmelder handeln, die mit dem Internet bzw. Intranet verbunden sind.

Verfahren und System zur Autorisierung der Kommunikation eines Netzwerkknotens eines Kommunikationsnetzwerkes, wobei die Kommunikation des Netzwerkknotens nur erlaubt ist, wenn der Netzwerkknoten nach einer erfolgten NFC-Verbindung mit einem definierten (mit Vorteil zertifizierten) mobilen Kommunikationsendgerät eine Autorisierung erhält.

### Bezugszeichen

- REQ: Anforderung
- IDn: Identifikation (ID)
- FW: Firmware
- GRANT, GRANT_{IDn}: Bewilligung
- CLOUD: Cloud-Infrastruktur
- CSA: Cloud Service Application
- GW: Gateway
- IoT1 - IoT4: IoT-Gerät
- PANEL: Steuer- und Bedienpanel
- ML: Melderlinie
- AL: Alarm
- BAT: Batterie
- M: Speicher
- SMART: Mobiles Kommunikationsendgerät
- DIS: Display
- APP: Applikationsprogramm
- IP1, IP2: IP-Verbindung
- NFC: Nahfeldkommunikation
- VS1: Verfahrensschritt

## Patentansprüche

1. Verfahren zur Autorisierung der Kommunikation eines Netzwerkknotens (IoT1 - IoT4, PANEL) eines Kommunikationsnetzwerkes (IP2), wobei die Kommunikation des Netzwerkknotens (IoT1 - IoT4, PANEL) nur erlaubt ist, wenn der Netzwerkknoten (IoT1 - IoT4, PANEL) nach einer erfolgten NFC-Verbindung (NFC) mit einem definierten mobilen Kommunikationsendgerät (SMART) eine Autorisierung (GRANT, GRANT_{IDn}) erhält, wobei eine Kommunikation des Netzwerkknotens (IoT1 - IoT4, PANEL) nur erfolgt, wenn sich das definierte mobile Kommunikationsendgerät (SMART) innerhalb einer definierten Entfernung von höchstens 3 bis 4m zum Netzwerkknoten (IoT1 - IoT4, PANEL) befindet, und wobei der Netzwerkknoten (IoT1 - IoT4, PANEL) während einer Kommunikation in einer permanenten NFC-Verbindung mit dem definierten mobilen Kommunikationsendgerät (SMART) steht.

2. Verfahren nach Anspruch 1, wobei der Netzwerkknoten (IoT1 - IoT4, PANEL) vor der Kommunikation die Autorisierung vom mobilen Kommunikationsendgerät (SMART) erhält.

3. Verfahren nach einem der vorstehenden Ansprüche, wobei der Netzwerkknoten (IoT1 - IoT4, PANEL) vor der Kommunikation die Autorisierung (GRANT, GRANT_{IDn}) durch einen entsprechend eingerichteten Cloud-Server (CSA) erhält.

4. Verfahren nach einem der vorstehenden Ansprüche, wobei der Netzwerkknoten (IoT1 - IoT4, PANEL) nach Erhalt der Autorisierung das mobile Kommunikationsendgerät (SMART) über NFC-Verbindung (NFC) auffordert, eine Quittierung an den Netzwercknoten (IoT1 - IoT4, PANEL) zu senden.

5. Verfahren nach einem der vorstehenden Ansprüche, wobei der Netzwerkknoten (IoT1 - IoT4, PANEL) nach Erhalt der Autorisierung das mobile Kommunikationsendgerät (SMART) über NFC-Verbindung (NFC) auffordert, eine Quittierung an einen Zertifizierungsserver zu senden.

6. Verfahren nach einem der vorstehenden Ansprüche, wobei das mobile Kommunikationsendgerät (SMART) eine Autorisierung durch einen Zertifizierungsserver erhält.

7. Verfahren nach einem der vorstehenden Ansprüche, wobei nur nach einer erfolgten Autorisierung ein Schreibzugriff auf einen Speicher (M) des autorisierten Netzwerkknotens (IoT1 - I-oT4, PANEL) erlaubt wird.

8. System zur Autorisierung der Kommunikation von Netzwerkknoten (IoT1 - IoT4, PANEL) innerhalb eines Kommunikationsnetzwerkes (IP2), wobei ein Netzwerkknoten (IoT1 - IoT4, PANEL) dazu eingerichtet ist, dass er eine Kommunikation nur durchführen kann, wenn er nach einer erfolgten NFC-Verbindung (NFC) mit einem definierten mobilen Kommunikationsendgerät (SMART) eine Autorisierung erhält, wobei eine Kommunikation des Netzwerkknotens (IoT1 - IoT4, PANEL) nur erfolgt, wenn sich das definierte mobile Kommunikationsendgerät (SMART) innerhalb einer definierten Entfernung von höchstens 3 bis 4m zum Netzwerkknoten (IoT1 - IoT4, PANEL) befindet und wobei der Netzwerkknoten (I-oT1 - IoT4, PANEL) während einer Kommunikation in einer permanenten NFC-Verbindung mit dem definierten mobilen Kommunikationsendgerät (SMART) steht.

9. System nach Anspruch 8, wobei der Netzwerkknoten (IoT1 - IoT4, PANEL) dazu eingerichtet ist, dass er während der Dauer einer Kommunikation in einer permanenten NFC-Verbindung (NFC) mit dem mobilen Kommunikationsendgerät (SMART) steht.

10. System nach Anspruch 8 oder 9, wobei der Netzwerkknoten (IoT1 - IoT4, PANEL) nach erfolgter Autorisierung dazu eingerichtet ist, einen Schreibzugriff auf einen Speicher (M) dieses autorisierten Netzwerkknotens (IoT1 - IoT4, PANEL) zu erlauben.

11. Netzwerkknoten (IoT1 - IoT4, PANEL) eines Kommunikationsnetzwerkes (z.B. IP-Netzwerk), wobei der Netzwerkknoten (IoT1 - IoT4, PANEL) dazu eingerichtet ist, dass er eine Kommunikation nur durchführen kann, wenn er nach einer erfolgten NFC-Verbindung (NFC) mit einem definierten mobilen Kommunikationsendgerät (SMART) eine Autorisierung erhält, wobei eine Kommunikation des Netzwerkknotens (IoT1 - IoT4, PANEL) nur erfolgt, wenn sich das definierte mobile Kommunikationsendgerät (SMART) innerhalb einer definierten Entfernung von höchstens 3 bis 4m zum Netzwerkknoten (IoT1 - IoT4, PANEL) befindet und wobei der Netzwerkknoten (IoT1 - IoT4, PANEL) während einer Kommunikation in einer permanenten NFC-Verbindung mit dem definierten mobilen Kommunikationsendgerät (SMART) steht.

12. Netzwerkknoten (IoT1 - IoT4, PANEL) nach Anspruch 11, wobei es sich beim Netzwerkknoten (IoT1 - IoT4, PANEL) um ein IoT-Gerät handelt.

13. Netzwerkknoten (IoT1 - IoT4, PANEL) nach Anspruch 11 oder 12, wobei der Netzwerkknoten (IoT1 - IoT4, PANEL) nach erfolgter Autorisierung dazu eingerichtet ist, einen Schreibzugriff auf einen Speicher (M) dieses autorisierten Netzwerkknotens (IoT1 - IoT4, PANEL) zu erlauben.

## Claims

1. Method for authorising the communication of a network node (IoT1 - IoT4, PANEL) of a communication network (IP2), wherein the communication of the network node (IoT1 - IoT4, PANEL) is only permitted if the network node (IoT1 - IoT4, PANEL) receives an authorisation (GRANT, GRANT_{Idn}) after a completed NFC connection (NFC) with a defined mobile communication terminal (SMART), wherein a communication of the network node (IoT1 - IoT4, PANEL) only takes place if the defined mobile communication terminal (SMART) is located within a defined distance of a maximum of 3 to 4m from the network node (IoT1 - IoT4, PANEL), and wherein the network node (IoT1 - IoT4, PANEL) is in a permanent NFC connection with the defined mobile communication terminal during a communication.

2. Method according to claim 1, wherein the network node (IoT1 - IoT4, PANEL) receives the authorisation from the mobile communication terminal (SMART) prior to the communication.

3. Method according to one of the preceding claims, wherein the network node (IoT1 - IoT4, PANEL) receives the authorisation (GRANT, GRANT_{IDn}) via a correspondingly configured cloud server (CSA) prior to the communication.

4. Method according to one of the preceding claims, wherein following receipt of the authorisation the network node (IoT1 - IoT4, PANEL) requests the mobile communication terminal (SMART) via the NFC connection (NFC) to send an acknowledgment to the network node (IoT1 - IoT4, PANEL).

5. Method according to one of the preceding claims, wherein following receipt of the authorisation the network node (IoT1 - IoT4, PANEL) requests the mobile communication terminal (SMART) via the NFC connection (NFC) to send an acknowledgment to a certification server.

6. Method according to one of the preceding claims, wherein the mobile communication terminal (SMART) receives an authorisation via a certification server.

7. Method according to one of the preceding claims, wherein a write access to a memory (M) of the authorised network node (IoT1 - IoT4, PANEL) is only permitted following a completed authorisation.

8. System for authorising the communication of network nodes (IoT1 - IoT4, PANEL) within a communication network (IP2), wherein a network node (IoT1 - IoT4, PANEL) is configured in such a way that it can only carry out a communication if it receives an authorisation following a completed NFC connection (NFC) with a defined mobile communication terminal (SMART), wherein a communication of the network node (IoT1 - IoT4, PANEL) only takes place if the defined mobile communication terminal (SMART) is located within a defined distance of a maximum of 3 to 4m from the network node (IoT1 - IoT4, PANEL) and wherein the network node (IoT1 - IoT4, PANEL) is in a permanent NFC connection with the defined mobile communication terminal during a communication.

9. System according to claim 8, wherein the network node (IoT1 - IoT4, PANEL) is configured in such a way that it is in a permanent NFC connection (NFC) with the mobile communication terminal (SMART) for the duration of a communication.

10. System according to claim 8 or 9, wherein following completed authorisation the network node (IoT1 - IoT4, PANEL) is configured to allow a write access to a memory (M) of this authorised network node (IoT1 - IoT4, PANEL).

11. Network node (IoT1 - IoT4, PANEL) of a communication network (e.g. IP network), wherein the network node (IoT1 - IoT4, PANEL) is configured in such a way that it can only carry out a communication if it receives an authorisation following a completed NFC connection (NFC) with a defined mobile communication terminal (SMART), wherein a communication of the network node (IoT1 - IoT4, PANEL) only takes place if the defined mobile communication terminal (SMART) is located within a defined distance of a maximum of 3 to 4m from the network node (IoT1 - IoT4, PANEL) and wherein the network node (IoT1 - IoT4, PANEL) is in a permanent NFC connection with the defined mobile communication terminal during a communication.

12. Network node (IoT1 - IoT4, PANEL) according to claim 11, wherein the network node (IoT1 - IoT4, PANEL) is an IoT device.

13. Network node (IoT1 - IoT4, PANEL) according to claim 11 or 12, wherein following completed authorisation the network node (IoT1 - IoT4, PANEL) is configured to allow a write access to a memory (M) of this authorised network node (IoT1 - IoT4, PANEL).

## Revendications

1. Procédé d'autorisation de communication d'un noeud de réseau (IoT1 - IoT4, PANEL) d'un réseau de communication (IP2), dans lequel la communication du noeud de réseau (IoT1 - IoT4, PANEL) n'est autorisée que si le noeud de réseau (IoT1 - IoT4, PANEL) reçoit une autorisation (GRANT, GRANT_{IDn}) après établissement d'une liaison NFC (NFC) avec un appareil de communication mobile défini (SMART), une communication du noeud de réseau (IoT1 - IoT4, PANEL) ne s'établissant que si l'appareil de communication mobile défini (SMART) se trouve à moins d'une distance définie de maximum 3 à 4m du noeud de réseau (IoT1 - IoT4, PANEL), et le noeud de réseau (IoT1 - IoT4, PANEL) étant en liaison NFC permanente avec l'appareil de communication mobile défini (SMART) pendant une communication.

2. Procédé selon la revendication 1 dans lequel le noeud de réseau (IoT1 - IoT4, PANEL) reçoit l'autorisation de l'appareil de communication mobile (SMART) avant la communication.

3. Procédé selon l'une des revendications précédentes, dans lequel le noeud de réseau (IoT1 - IoT4, PANEL) reçoit l'autorisation (GRANT, GRANT_{Idn}) via un serveur Cloud (CSA) dédié correspondant avant la communication.

4. Procédé selon l'une des revendications précédentes dans lequel, après réception de l'autorisation, le noeud de réseau (IoT1 - IoT4, PANEL) demande par liaison NFC (NFC) à l'appareil de communication mobile (SMART) d'envoyer un accusé-réception au noeud de réseau (IoT1 - IoT4, PANEL).

5. Procédé selon l'une des revendications précédentes dans lequel, après réception de l'autorisation, le noeud de réseau (IoT1 - IoT4, PANEL) demande par liaison NFC (NFC) à l'appareil de communication mobile (SMART) d'envoyer un accusé-réception à un serveur de certification.

6. Procédé selon l'une des revendications précédentes dans lequel l'appareil de communication mobile (SMART) reçoit une autorisation par un serveur de certification.

7. Procédé selon l'une des revendications précédentes, dans lequel ce n'est qu'après obtention d'une autorisation qu'un accès en écriture à une mémoire (M) du noeud de réseau (IoT1 - IoT4, PANEL) autorisé est permis.

8. Système d'autorisation de communication d'un noeud de réseau (IoT1 - IoT4, PANEL) au sein d'un réseau de communication (IP2), dans lequel un noeud de réseau (IoT1 - IoT4, PANEL) est conçu pour ne pouvoir effectuer une communication que s'il reçoit une autorisation après établissement d'une liaison NFC (NFC) avec un appareil de communication mobile défini (SMART), une communication du noeud de réseau (IoT1 - IoT4, PANEL) ne s'établissant que si l'appareil de communication mobile défini (SMART) se trouve à moins d'une distance définie de maximum 3 à 4m du noeud de réseau (IoT1 - IoT4, PANEL), et le noeud de réseau (IoT1 - IoT4, PANEL) étant en liaison NFC permanente avec l'appareil de communication mobile défini (SMART) pendant une communication.

9. Système selon la revendication 8, dans lequel le noeud de réseau (IoT1 - IoT4, PANEL) est conçu pour être en liaison NFC permanente (NFC) avec l'appareil de communication mobile (SMART) pendant la durée d'une communication.

10. Système selon la revendication 8 ou 9, dans lequel le noeud de réseau (IoT1 - IoT4, PANEL) est conçu pour permettre, après obtention d'une autorisation, un accès en écriture sur une mémoire (M) de ce noeud de réseau autorisé (IoT1 - IoT4, PANEL).

11. Noeud de réseau (IoT1 - IoT4, PANEL) d'un réseau de communication (ex. réseau IP), dans lequel le noeud de réseau (IoT1 - IoT4, PANEL) est conçu pour ne pouvoir effectuer une communication que s'il reçoit une autorisation après établissement d'une liaison NFC (NFC) avec un appareil de communication mobile défini (SMART), une communication du noeud de réseau (IoT1 - IoT4, PANEL) ne s'établissant que si l'appareil de communication mobile défini (SMART) se trouve à moins d'une distance définie de maximum 3 à 4m du noeud de réseau (IoT1 - IoT4, PANEL), et le noeud de réseau (IoT1 - IoT4, PANEL) étant en liaison NFC permanente avec l'appareil de communication mobile défini (SMART) pendant une communication.

12. Noeud de réseau (IoT1 - IoT4, PANEL) selon la revendication 11, dans lequel le noeud de réseau (IoT1 - IoT4, PANEL) est un appareil IoT.

13. Noeud de réseau (IoT1 - IoT4, PANEL)selon la revendication 11 ou 12, dans lequel le noeud de réseau (IoT1 - IoT4, PANEL) est conçu pour permettre, après obtention d'une autorisation, un accès en écriture sur une mémoire (M) de ce noeud de réseau autorisé (IoT1 - IoT4, PANEL).
